# EUROPÄISCHE PATENTSCHRIFT

(11) **EP 0 522 343 B1**
(45) Veröffentlichungstag und Bekanntmachung des Hinweises auf die Patenterteilung: **01.05.1996**
(21) Anmeldenummer: 92110507.8
(22) Anmeldetag: 22.06.1992
(51) Int. Cl.: C04B 33/26, H01B 3/12

(54) **Hochfestes Tonerdeporzellan**
High strength alumina porcelain
Porcelaine à base d'alumine à résistance mécanique élevée

(30) Priorität: 03.07.1991 DE 4122023
(43) Veröffentlichungstag der Anmeldung: 13.01.1993
(73) Patentinhaber: SIEMENS AKTIENGESELLSCHAFT, D-80333 München (DE)
(72) Erfinder: Liebermann, Johannes, Dipl.-Ing., W-8620 Lichtenfels (DE)

(56) Entgegenhaltungen:
- EP-A- 0 189 260
- GB-A- 1 112 263
- GB-A- 2 056 431
- US-A- 4 183 760

## Beschreibung

Die Erfindung bezieht sich auf ein hochfestes Tonerdeporzellan, insbesondere für großformatige elektrische Isolatoren, bestehend aus einer calzinierten Mischung von Feldspat, Tonerde, Sinterhilfsmittel, Flußmittel und plastischen Komponenten.

Bei der Herstellung von großformatigen elektrischen Isolatoren ist es bekannt, calzinierte Tonerde als festigkeitssteigernden Anteil und ton- und kaolinhaltige Stoffe als plastische Komponenten sowie Flußmittel und Zuschläge zu verarbeiten (EP-B1 0 122 970). Solche Tonerdeporzellanmassen haben bei Tonerdeanteilen von bis zu 45 Gew.-% nicht die für einige Anwendungszwecke - wie zum Beispiel erdbebengefährdete Schaltanlagen - erforderliche hohe mechanische Festigkeit. Um für Anwendungen mit erhöhter mechanischer Belastung eine spezifische Biegefestigkeit über 65 N/mm² zu erreichen, müssen solche als hochfest bezeichneten Porzellane etwa 65 Gew.-% calzinierte Tonerde enthalten. Offenbar wegen des mit steigendem Tonerdeanteil abnehmenden Anteils an plastischen Stoffen lassen sich damit stärkere Vollkernisolatoren aus hochfesten Massen erheblich schwerer herstellen als Hohlkernisolatoren mit vergleichsweise dünnen Wandstärken. Darüber hinaus liegen die Sintertemperaturen solcher hochfester Tonerdeporzellane im Bereich von 1340 °C und damit um ca. 130 °C über der Sintertemperatur von Tonerdeporzellanen mit geringeren Gehalten an Tonerde und mit geringerer mechanischer Festigkeit.

Dies hat zur Folge, daß hochfeste Tonerdeporzellane wegen des höheren Anteils an Tonerde schon allein vom Rohstoff her teurer sind als Tonerdeporzellane mit geringeren Festigkeitsanforderungen. Darüber hinaus erfordern hochfeste Tonerdeporzellane Öfen, die eine entsprechend höhere Sintertemperatur zulassen. Vor allem aber müssen beim Umstellen der Produktion von hochfesten Tonerdeporzellanen zu normalen Tonerdeporzellanen die gesamten Produktionsanlagen stillgesetzt und gereinigt werden, weil beide Massen nicht miteinander verträglich sind. Verunreinigungen der normalen Tonerdeporzellanmassen mit hochfesten Tonerdeporzellanmassen würden dazu führen, daß nach dem Sintervorgang höchst unerwünschte poröse Nester hochfester Porzellanmassen in dem fertigen Porzellan verbleiben. In der Praxis führt das bei jedem Massenwechsel wegen der Anlagenreinigung zu einem Maschinenstillstand und Produktionsausfall.

Durch die EP 0 189 260 A3 ist ein hochfestes Tonerdeporzellan offenbart, das beispielsweise zu 70% aus kalziniertem Material, bestehend aus 27 Gew.-% Quarz, 18 Gew.-% Feldspat und 55 Gew.% Tonerde, und 30 Gew.-%Ton besteht. Dieses Tonerdeporzellan hat eine Biegefestigkeit von etwa 235 N/mm² und wird bei 1300 bis 1350° C gesintert.

Durch die GB-A-2 056 431 wird ein ähnliches Tonerdeporzellan offenbart, das beispielsweise neben Ton, Bentonit, Kaolin, Feldspat und Bariumcarbonat 42,0 Gew.-% Tonerde, 0,4 Gew.-% Eisenoxid Fe₂O₃, 0,1 Gew.-% CaO und 0,2 Gew.-% MgO enthält. Die Biegefestigkeit eines solchen Tonerdeporzellans beträgt 192 N/mm², die Sintertemperatur liegt oberhalb von 1250° C.

Durch die US-PS 4,183,760 wird auch ein Tonerdeporzellan offenbart, das neben Ton und Nepheline Syenite 40 Gew.-% Tonerde enthält. Die Biegefestigkeit beträgt 214 N/mm², die Sintertemperatur liegt um 1200° C. Dieses Tonerdeporzellan enthält offensichtlich kein MgO, CaO und Eisenoxid.

Der Erfindung liegt die Aufgabe zugrunde, einen Weg zu weisen, wie hochfeste Tonerdeporzellanmassen mit den normalen Tonerdeporzellanmassen, wie sie sonst bei Isolatoren verwendet werden, miteinander verträglich gemacht werden können. Das bedeutet vor allem, daß die Sintertemperatur der verschiedenen Porzellanmassen aneinander angepaßt werden müssen. Dabei soll die Fließfähigkeit des hochfesten Tonerdeporzellans besonders günstig beeinflußt werden, was im besonderen hohe Anforderungen an die als Sinterhilfsmittel beigemengten Stoffmengen stellt.

Diese Aufgabe wird erfindungsgemäß durch die Ansprüche 1 und 4 gelöst. Weitere vorteilhafte Ausgestaltungen der Erfindung sind den Ansprüchen 2, 3 und 5 bis 11 zu entnehmen.

Dadurch, daß bei einem hochfesten Tonerdeporzellan, bestehend im wesentlichen aus einer calcinierten Mischung von Feldspat, Tonerde, Sinterhilfsmitteln und plastischen Komponenten, wobei 33 bis 45 Gew.-% calcinierter Tonerde vorhanden sind, erfindungsgemäß als Sinterhilfsmittel Magnesiumoxid, Calciumoxid und Zinkoxid vorhanden sind, wobei das Magnesiumoxid im Bereich von 0,5 bis 1,5 Gew.-%, das Calciumoxid im Bereich von 0,35 bis 1,2 Gew.-% und das Zinkoxid im Bereich von 0,2 bis 0,8 Gew.-% liegen, wird eine Reduzierung der Brennkosten infolge der Anpassung der Sintertemperaturen für hochfeste und normalfeste Tonerdeporzellanmassen erreicht. Dabei wird eine sehr hohe spezifische Biegefestigkeit von über 190 N/mm² am glasierten Biegestab erreicht.

Infolge der vorgesehenen Mischung von Feldspat, Tonerde, plastischen Komponenten und der Sinterhilfsmittel Magnesiumoxid, Calciumoxid und Zinkoxid miteinander, infolge der Beschränkung der Menge der Tonerdeporzellanmasse auf 33 bis 45 Gew.-% und der Sinterhilfsmittel auf weniger als insgesamt 5,5 Gew.-% der trockenen Masse ist es möglich, die Sintertemperatur in den Bereich zwischen 1200° C und 1300°C einzustellen. Dies hat zur Folge, daß bei der Umstellung der Produktion von dieser hochfesten Ton erdeporzellanmasse auf andere Tonerdeporzellanmassen mit geringeren Festigkeitsanforderungen allenfalls verbleibende Reste der alten hochfesten Tonerdeporzellanmasse, die in der weniger festen Tonerdeporzellanmasse eingeschleust werden, mit dieser bei deren Sintertemperatur im Bereich von 1200° C bis 1300° C mitversintern. Auf diese Weise können keine porösen Reste in dem ausgesinterten Porzellankörper mehr zurückbleiben.

Dies wiederum hat zur Folge, daß in der Fertigung ein fließender Übergang von hochfesten auf normalfeste Tonerdeporzellanmassen problemlos erfolgen kann. Darüber hinaus eröffnet dies die Möglichkeit, daß beide Massen zur Festigkeitssteuerung gefahrlos miteinander vermischt werden können.

In besonders vorteilhafter Weiterbildung der Erfindung kann das hochfeste Tonerdeporzellan Eisenoxid in Mengen von unter 1 Gew.-% enthalten. Dieses Eisenoxid begünstigt den Sintervorgang und die späteren Scherbeneigenschaften. Darüber hinaus bewirkt es während des Sintervorgangs - wenn dieser in einer reduzierenden Brennatmosphäre erfolgt und das Fe₂O₃ in FeO umgewandelt ist - eine weitere Absenkung der Sintertemperatur, weil das FeO als Flußmittel wirkt.

In weiterer zweckmäßiger Ausgestaltung der Erfindung kann der Tonerde-Porzellanmasse vor dem Sintervorgang weniger als 1,2 Gew.-% CaO als Sinterhilfsmittel beigemischt werden. Durch diese Beigabe läßt sich die Sintertemperatur der Porzellanmasse zusätzlich absenken.

In weiterer vorteilhafter Ausgestaltung der Erfindung kann der Tonerdeporzellanmasse vor dem Sintervorgang weniger als 1,2 Gew.-% MgO als Sinterhilfsmittel beigemischt werden. Hierdurch läßt sich eine weitere Absenkung der Sintertemperatur erreichen.

Weitere Ausgestaltungen der Erfindung werden anhand eines Ausführungsbeispiels erläutert:
Das Herstellverfahren für das hochfeste Tonerdeporzellan umfaßt die Arbeitsgänge Zudosieren der einzelnen nachfolgend genannten Ausgangsmaterialien, Vermischen derselben, Aufbereitung eines Schlickers durch Zugabe von Wasser und Mahlen desselben vorzugsweise in einer Kugelmühle, Entwässern der vermischten und gemahlenen Masse auf einer Filterpresse, Formen der Masse durch Pressen, Drehen, Strangziehen oder Gießen, Trocknen des so erhaltenen Formkörpers und Sintern desselben.

Als Ausgangsmaterial wird eine Mischung von Feldspat, Tonerde, Kaolin, Ton sowie Sinterhilfsmitteln hergestellt. Als Sinterhilfsmittel werden Magnesiumoxid, Calziumoxid und Zinkoxid eingesetzt. Im Ausführungsbeispiel werden 0,5 bis 0,65 Gew.-% Calziumoxid, 0,8 bis 0,9 Gew.-% Magnesiumoxid und etwa 0,4 Gew.-% Zinkoxid als Sinterhilfsmittel zugegeben. Darüber hinaus werden durch Auswahl entsprechend mit Eisenoxid verunreinigter Ausgangsstoffe Vorkehrungen getroffen, daß sich etwa 0,7 bis 0,8 Gew.-% Eisenoxid in der eingesetzten Masse befinden. Dabei beziehen sich alle Gewichtsangaben auf die ungeglühte, trockene Mischung sämtlicher Ausgangsstoffe.

Nach der Mischung dieser Ausgangsstoffe und der Aufbereitung eines Schlickers durch Zugabe von Wasser wird die Mischung vorzugsweise in einer Kugelmühle vermahlen. Dabei soll durch das Vermahlen nicht nur eine intensive Durchmischung der Ausgangsstoffe angestrebt werden. Vielmehr soll dabei eine Korngrößenverringerung erreicht werden, bei der nur 0,8 % der Masse eine Korngröße über 63 µm behält. Nach dem Vermahlen der Ausangsstoffe werden noch weitere plastische Tonmineralien zugemischt. Nach dem Entwässern des so erhaltenen Schlickers und der Formung des entwässerten Schlickers zu den gewünschten Formkörpern werden diese vorgetrocknet und in einem Ofen in einer reduzierenden Atmosphäre bei Temperaturen gesintert, die im Ausführungsbeispiel bei 1210 bis 1240 °C, vorzugsweise bei 1220° C, liegen. Dabei wird das Brenngas in der Ofenatmosphäre mit unterstöchiometrischer Sauerstoffzugabe verbrannt. In der reduzierenden Atmosphäre findet bei dieser Sintertemperatur eine Reduzierung des Eisenoxids Fe₂O₃ in FeO statt. Das auf diese Weise gebildete FeO wirkt bei der Temperatur der Schmelze wie ein intensives Flußmittel und senkt die Sintertemperatur zusammen mit den übrigen Flußmitteln ab. Darüber hinaus verbessert es die Scherbeneigenschaften.

Gemäß der Erfindung werden die Sinterhilfsmittel Magnesiumoxid, Calziumoxid und Zinkoxid in den genannten Mengen gleichzeitig nebeneinander vorhanden sind. In den genannten Mengenverhältnissen dieser drei Sinterhilfsmittel ist deren Wirkung stärker, als wenn nur eines oder zwei dieser Stoffe eingesetzt würden. Überraschenderweise hat sich gezeigt, daß - vermutlich wegen des geringeren Tonerdeanteils - sich diese Tonerdeporzellanmasse besser verdichten läßt, so daß größere Wandstärken mit hoher Festigkeit herstellbar werden, wie zum Beispiel hochfeste Vollkernisolatoren für 420 KV Anlagen in erdbebengefährdeten Regionen.

Die Sintertemperatur muß solange aufrechterhalten werden, bis das Scherbengefüge frei von Restquarz ist. Dieser würde sonst nur die Festigkeit mindern. Während des Sintervorgangs löst die Glasmatrix den kristallinen Quarz vollständig auf, so daß letzterer nach einer gewissen Zeit nur noch molekular in der Glasphase gelöst vorkommt. Durch die vorgenannte gezielte Auswahl von Tonerde, Flußmitteln und Mineralisatoren wird während der Sintertemperatur von vorzugsweise 1220° C relativ viel Mullit und Korund erzeugt, wodurch die gewünschte hohe spezifische mechanische Festigkeit von über 220 N/mm² am glasierten Biegestab, im Ausführungsbeispiel von 78 bis 82 N/mm² am Fertigprodukt, erreicht wird. Als Flußmittel werden auch K₂O und Na₂O eingesetzt.

Es ist ein großer Vorteil des erfindungsgemäßen Herstellverfahrens, daß hochfestes Tonerdeporzellan hergestellt werden kann, welches bei einer Temperatur sintert, die mit der Sintertemperatur der sonstigen Tonerde-Porzellane aus der laufenden Betriebsmasse mit geringerem Al₂O₃-Gehalt übereinstimmt. Hierdurch wird es möglich, im Betrieb fließend vom hochfesten Tonerde-Porzellan zu anderen Tonerdeporzellanen umzuwechsein, ohne daß befürchtet werden muß, daß Reste der hochfesten Tonerdeporzellanmasse, welche in die normale Porzellanmasse gelangt, bei der Brenntemperatur desselben poröse Nester bilden. Auch können so beide Massen im gleichen Ofen und unter gleichem Brennregime gebrannt werden. Darüber hinaus bedeutet die um ca. 100 °C niedrigere Sintertemperatur auch eine erhebliche Energieersparung beim Fertigungsprozeß. Ein weiterer besonders gravierender Vorteil dieser hochfesten Tonerdeporzellanmasse ist es, daß damit auch Vollkernisolatoren größeren Durchmessers herstellbar sind.

## Patentansprüche

1. Hochfestes Tonerdeporzellan, insbesondere für großformatige elektrische Isolatoren, bestehend aus einer calzinierten Mischung von Feldspat, Tonerde, Sinterhilfsmittel, Flußmittel und plastischen Komponenten, wobei bei einer spezifischen Biegefestigkeit von über 190 N/mm² am glasierten Biegestab nur 33 bis 45 Gew.-% calzinierte Tonerde vorhanden ist,
**dadurch gekennzeichnet,** daß als Sinterhilfsmittel Magnesiumoxid, Calziumoxid und Zinkoxid vorhanden sind, wobei das Magnesiumoxid im Bereich von 0,5 bis 1,5 Gew.-%, das Calziumoxid im Bereich von 0,35 bis 1,2 Gew.-% und das Zinkoxid im Bereich von 0,2 bis 0,8 Gew.-% liegen.

2. Hochfestes Tonerdeporzellan nach Anspruch 1,
**dadurch gekennzeichnet,** daß Eisenoxid FeO in Mengen unter 1 Gew.-% im Porzellan enthalten ist.

3. Hochfestes Tonerdeporzellan nach Anspruch 1 oder 2,
**dadurch gekennzeichnet,** daß das Porzellan frei von kristallinem Restquarz ist.

4. Verfahren zur Herstellung eines hochfesten Porzellans, insbesondere nach einem der Ansprüche 1 bis 3,
**dadurch gekennzeichnet,** daß Feldspat, Tonerde, plastische Komponenten und als Sinterhilfsmittel Magnesiumoxid, Calziumoxid und Zinkoxid miteinanader vermischt und bei Temperaturen zwischen 1200 und 1300° C gesintert werden, wobei die Tonerdeporzellanmasse nur 33 bis 45 Gew.-% Tonerde und weniger als insgesamt 5,5 Gew.-% Sinterhilfs- und Flußmittel enthält.

5. Verfahren nach Anspruch 4,
**dadurch gekennzeichnet,** daß der Tonerdeporzellanmasse vor dem Sintervorgang weniger als 1,2 Gew.-% CaO als Sinterhilfsmittel beigemischt wird.

6. Verfahren nach Anspruch 4 oder 5,
**dadurch gekennzeichnet,** daß der Tonerdeporzellanmasse vor dem Sintervorgang weniger als 1,2 Gew.-% MgO als Sinterhilfsmittel beigemischt wird.

7. Verfahren nach einem der Ansprüche 4 bis 6,
**dadurch gekennzeichnet,** daß der Tonerdeporzellanmasse vor dem Sintervorgang Eisenoxid FeO in Mengen von weniger als 1 Gew.-% beigemischt wird.

8. Verfahren nach einem der Ansprüche 4 bis 7,
**dadurch gekennzeichnet,** daß die Sinterung der Tonerdeporzellanmasse bei Temperaturen zwischen 1220 und 1250° C erfolgt.

9. Verfahren nach einem der Ansprüche 4 bis 8,
**dadurch gekennzeichnet,** daß in einer sauerstoffarmen Atmosphäre gesintert wird.

10. Verfahren nach einem der Ansprüche 4 bis 9,
**dadurch gekennzeichnet,** daß die Sintertemperatur so lange aufrechterhalten wird, bis die Mischung frei von Restquarz ist und alles SiO₂ molekular in der Glasphase gelöst ist.

11. Verfahren nach einem der Ansprüche 4 bis 10,
**dadurch gekennzeichnet,** daß die Sintertemperatur je nach Wandstärke des extrudierten Keramikkörpers 20 bis 80 Minuten lang aufrechterhalten wird.

12. Verwendung des hochfesten Tonerdeporzellans nach einem der Ansprüche 1 bis 3 zur Steuerung der Festigkeit durch Vermischung mit anteilmäßig weniger festem Tonerdeporzellan.

## Claims

1. High-strength alumina porcelain, in particular for large-sized electrical insulators, consisting of a calcined mixture of feldspar, alumina, sintering aids, fluxing agents and plastic components, in which case only 33 to 45% by weight calcined alumina is present for a specific bending strength of over 190 N/mm² on the glazed bending bar, characterised in that magnesium oxide, calcium oxide and zinc oxide are provided as sintering aids, in which case the magnesium oxide lies in the range of 0.5 to 1.5% by weight, the calcium oxide lies in the range of 0.35 to 1.2% by weight and the zinc oxide lies in the range of 0.2 to 0.8% by weight.

2. High-strength alumina porcelain according to claim 1, characterised in that iron oxide FeO is contained in the porcelain in quantities of less than 1% by weight.

3. High-strength alumina porcelain according to claim 1 or 2, characterised in that the porcelain is free of crystalline residual quartz.

4. Method for the preparation of a high-strength porcelain, in particular according to one of the claims 1 to 3, characterised in that feldspar, alumina, plastic components and, as sintering aids, magnesium oxide, calcium oxide and zinc oxide are mixed together and are sintered at temperatures of between 1200 and 1300°C, in which case the alumina porcelain mass contains only 33 to 45% by weight alumina and less than in total 5.5% by weight sintering aids and fluxing agents.

5. Method according to claim 4, characterised in that less than 1.2% by weight CaO as a sintering aid is admixed with the alumina porcelain mass before the sintering process.

6. Method according to claim 4 or 5, characterised in that less than 1.2% by weight MgO as a sintering aid is admixed with the alumina porcelain mass before the sintering process.

7. Method according to one of the claims 4 to 6, characterised in that iron oxide FeO in quantities of less than 1% by weight is admixed with the alumina porcelain mass before the sintering process.

8. Method according to one of the claims 4 to 7, characterised in that the sintering of the alumina porcelain mass is effected at temperatures of between 1220 and 1250°C.

9. Method according to one of the claims 4 to 8, characterised in that sintering is carried out in an atmosphere which is deficient in oxygen.

10. Method according to one of the claims 4 to 9, characterised in that the sintering temperature is maintained for so long until the mixture is free of residual quartz and all the SiO₂ is dissolved molecularly in the glass phase.

11. Method according to one of the claims 4 to 10, characterised in that the sintering temperature is maintained for 20 to 80 minutes according to the wall thickness of the extruded ceramic body.

12. Use of the high-strength alumina porcelain according to one of the claims 1 to 3 for controlling strength by mixing with alumina porcelain which is proportionately weaker.

## Revendications

1. Porcelaine à base d'alumine, à haute résistance, en particulier pour des isolateurs électriques de grand format, constituée d'un mélange calciné de feldsphath, d'alumine, d'adjuvants de frittage, de fondants et de constituants plastiques, dans laquelle, pour une résistance à la flexion spécifique de plus de 190 N/mm² sur un barreau de flexion vitrifié, seuls 33 à 45 % en poids d'alumine calcinée sont présents, caractérisée en ce qu'elle contient comme adjuvant de frittage de l'oxyde de magnésium, de l'oxyde de calcium et de l'oxyde de zinc, l'oxyde de magnésium étant dans l'intervalle de 0,5 à 1,5 % en poids, l'oxyde de calcium dans l'intervalle de 0,35 à 1,2 % en poids et l'oxyde de zinc dans l'intervalle de 0,2 à 0,8 % en poids.

2. Porcelaine à base d'alumine à haute résistance selon la revendication 1, caractérisée en ce que la porcelaine contient de l'oxyde de fer FeO dans des quantités inférieures à 1 % en poids.

3. Porcelaine à base d'alumine à haute résistance selon les revendications 1 ou 2, caractérisée en ce que la porcelaine est exempte de quartz résiduel cristallin.

4. Procédé de fabrication d'une porcelaine à haute résistance, en particulier selon l'une des revendications 1 à 3, caractérisé en ce que l'on mélange du feldsphath, de l'alumine, des constituants plastiques et comme adjuvants de frittage de l'oxyde de magnésium, de l'oxyde de calcium et de l'oxyde de zinc et en ce qu'on les fritte à des températures comprises entre 1200 et 1300 °C, la masse de porcelaine à base d'alumine ne contenant que 33 à 45 % en poids d'alumine et moins de 5,5 % en poids au total d'adjuvants de frittage et de fondants.

5. Procédé selon la revendication 4, caractérisé en ce que l'on mélange à la masse de porcelaine à base d'alumine, avant l'opération de frittage, moins de 1,2 % en poids de CaO comme adjuvant de frittage.

6. Procédé selon les revendications 4 ou 5, caractérisé en ce que l'on mélange à la masse de porcelaine à base d'alumine, avant l'opération de frittage, moins de 1,2 % en poids de MgO comme adjuvant de frittage.

7. Procédé selon les revendications 4 à 6, caractérisé en ce que l'on mélange à la masse de porcelaine à base d'alumine, avant l'opération de frittage, de l'oxyde de fer FeO dans des quantités inférieures à 1 % en poids.

8. Procédé selon l'une des revendications 4 à 7, caractérisé en ce que le frittage de la masse de porcelaine à base d'alumine s'effectue à des températures comprises entre 1220 et 1250 °C.

9. Procédé selon l'une des revendications 4 à 7, caractérisé en ce que l'on fritte dans une atmosphère pauvre en oxygène.

10. Procédé selon l'une des revendications 4 à 9, caractérisé en ce que la température de frittage est maintenue jusqu'à ce que le mélange soit exempt de quartz résiduel, et que tout le SiO₂ soit dissous sous forme moléculaire dans la phase vitreuse.

11. Procédé selon l'une des revendications 4 à 10, caractérisé en ce que la température de frittage est maintenue, suivant l'épaisseur de paroi de la pièce céramique extrudée, pendant 20 à 80 minutes.

12. Utilisation de la porcelaine à base d'alumine à haute résistance selon l'une des revendications 1 à 3 pour le réglage de la résistance par mélange avec une porcelaine à base d'alumine proportionnellement moins résistante.
